# EUROPÄISCHE PATENTSCHRIFT

(11) **EP 0 552 744 B1**
(45) Veröffentlichungstag und Bekanntmachung des Hinweises auf die Patenterteilung: **05.07.1995**
(21) Anmeldenummer: 93100820.5
(22) Anmeldetag: 20.01.1993
(51) Int. Cl.: B05B 7/14, B05B 12/00, B65G 53/14

(54) **Pulver-Injektor**
Powder injector
Injecteur de poudre

(30) Priorität: 22.01.1992 DE 4201665
(43) Veröffentlichungstag der Anmeldung: 28.07.1993
(73) Patentinhaber: WAGNER INTERNATIONAL AG, 9450 Altstätten (CH)
(72) Erfinder: Gruber, Johann, CH-9445 Rebstein (CH)
(74) Vertreter: Liesegang, Roland, Dr.-Ing.

(56) Entgegenhaltungen:
- DE-A- 3 042 201
- FR-A- 2 007 942

## Beschreibung

Die Erfindung betrifft einen Pulver-Injektor zum Bilden eines Pulver-Luft-Gemisches und Fördern des Gemisches zu einer Pulver-Beschichtungspistole gemäß dem Oberbegriff des Patentanspruchs 1. Ein derartiger Pulver-Injektor ist z.B. aus der DE 37 21 875 A1 bekannt und bei Pulver-Beschichtungsanlagen im Einsatz.

Bei dem bekannten Pulver-Injektor dieser Bauart werden Förderluft und Dosierluft unabhängig voneinander durch den Benutzer mittels der Förderluft-Zuführleitung und der Dosierluft-Zuführleitung zugeordneten Steuerventilen eingestellt bzw. verstellt. Dabei bewirkt die Verstellung der Förderluft eine Veränderung der angesaugten und zur Beschichtungspistole geförderten Pulvermenge sowie der Strömungsgeschwindigkeit des Pulver-Luft-Gemisches in der Zuführleitung zur Pulver-Beschichtungspistole. Die Dosierluft beeinflußt die Pulverkonzentration im Pulver-Luft-Gemisch und vor allem die Geschwindigkeit des Pulver-Luft-Gemisches in der Zuführleitung zur Beschichtungspistole, und zwar zusätzlich zur Förderluft. Dabei ist bekannt, daß bei geringer Förderluftmenge und damit geringem Förderluftdruck, wenn also geringe Pulvermengen benötigt werden, größere Dosierluftmengen und damit ein höherer Dosierluftdruck erforderlich sind, weil ansonsten die Geschwindigkeit des Pulver-Luft-Gemisches in der Zuführung zur Beschichtungspistole zu niedrig ist, mit der Folge einer Pulverausscheidung aus dem Gemisch, einer ungleichmäßigen Konzentration und des Auftretens von Pulsationen. Bei mittleren Förderluftdrücken kommt man dagegen mit vergleichsweise wenig Dosierluft aus, und bei höheren Förderluftdrücken genügt eine konstante Dosierluft-Grundmenge. Wenn also vorab gesagt worden ist, daß Förderluft und Dosierluft unabhängig voneinander durch den Benutzer eingestellt bzw. verstellt werden, so bedeutet dies, daß der Benutzer zunächst die Förderluft einstellt, und zwar so, daß die gewünschte Pulvermenge gefördert wird, und daraufhin die Dosierluftmenge "gefühlsmäßig" so einstellt, wie er sie für die vorgegebene Förderluftmenge für entsprechend erachtet. Selbstverständlich wird damit nur in seltensten Fällen eine optimale Zuordnung der Dosierluftmenge zur Förderluftmenge erreicht, wobei hinzukommt, daß auch Schwankungen des Förderluftdrucks auftreten können, der Benutzer also häufig die Dosierluft während des Betriebs auch dann nachregulieren muß, wenn keine Verstellung der Förderluft erfolgt ist. Schließlich ist dieses voneinander unabhängige Einstellen und Verstellen von Förderluft und Dosierluft mühsam und erfordert große Erfahrung.

Aufgabe der vorliegenden Erfindung ist es deshalb, einen PulverInjektor der eingangs erwähnten Art so zu verbessern, daß vom Benutzer nur ein einziger Einstell- bzw. Verstellvorgang vorgenommen werden muß, durch den die Förderluft auf den gewünschten Wert eingestellt und zugleich selbsttätig das Verhältnis zwischen Förderluft- und Dosierluftmenge so bemessen wird, daß eine optimale Förderung des Pulver-Luft-Gemisches zur Pulver-Beschichtungspistole gewährleistet ist. Im Dokument DE-A-3042201 wird die gleiche Aufgabe dadurch gelöst, daß durch ein einziges Regelorgan bei einer Verringerung bzw. Vergrößerung des Förderluftstromes eine dazu in einem bestimmten Verhältnis stehende Vergrößerung bzw. Verringerung des Dosierluftstromes erfolgt. Aus den kennzeichnenden Merkmalen des Patentanspruchs 1 ergibt sich eine andere Lösung der genannten Aufgabe.

Bei dem erfindungsgemäßen Pulver-Injektor hat der Benutzer lediglich das Steuerventil für die Förderluft entsprechend der für das Beschichten erforderlichen Pulvermenge einzustellen. Die Anpassung der Dosierluftmenge an die eingestellte Förderluftmenge erfolgt dagegen selbsttätig. Dabei gelangt bei allen Förderluft-Einstellungen durch die eine, kein Ventil beinhaltende Dosierluft-Zweigleitung stets eine bestimmte Basis-Dosierluftmenge zu den Dosierluftöffnungen, die zwar nicht vom Druck der Förderluft unabhängig ist aber mit diesem nur geringfügig ansteigt. Über die zweite, ein Ventil beinhaltende Dosierluft-Zweigleitung gelangt zusätzliche Dosierluft dann zu den Dosierluftöffnungen, wenn der Ventildurchlaß geöffnet ist. Dies ist der Fall, wenn der Förderluftdruck vergleichsweise gering ist. Steigt dieser Förderluftdruck aber über einen vorgegebenen Schwellenwert, dann beginnt das Ventil zu schließen und ist ab einem bestimmten zweiten Schwellenwert dann vollständig geschlossen. Mit anderen Worten, es wird auf selbsttätige Weise erreicht, daß bei geringer Förderluftmenge im Verhältnis viel und bei hoher Förderluftmenge im Verhältnis wenig Dosierluft dem Pulver-Luft-Gemisch zugeführt wird, also gerade der Abhängigkeitsverlauf des Verhältnisses von Dosierluft zu Förderluft vom Förderluftdruck auftritt, der von den Beschichtungsergebnissen her gefordert wird. Praktische Versuche haben dies bestätigt und gezeigt, daß die Beschichtungsqualität besonders bei profilierten Werkstücksoberflächen wesentlich besser ist als bei getrennter manueller Einstellung der Förderluft und der Dosierluft durch einen erfahrenen Fachmann.

Besonders zweckmäßige Ausgestaltungen der Erfindung ergeben sich aus den Unteransprüchen.

Auf der Zeichnung sind Ausführungsformen der Erfindung beispielsweise dargestellt. Es zeigen:

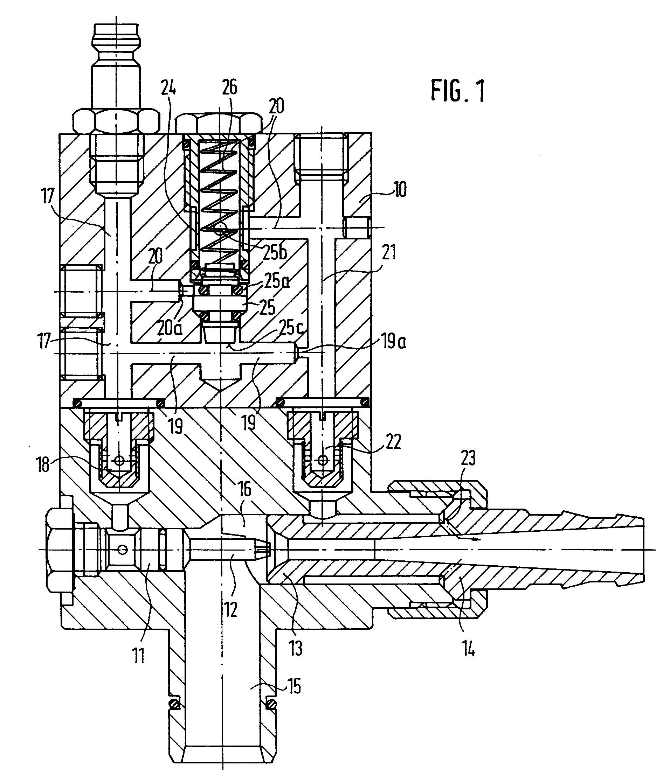

- Fig. 1: den Pulver-Injektor im Vertikalschnitt und
- Fig. 2: einen Vertikalschnitt durch eine Abwandlungsform des Dosierventils.

Auf der Zeichnung ist mit 10 der Gehäuseblock bezeichnet. Im unteren Teil des Blocks 10 befindet sich eine durchgehende Querbohrung, in die von der einen Seite her ein Düsenstock 11 mit Treibdüse 12 eingeschraubt ist, während auf der anderen Seite der Querbohrung eine der Treibdüse 12 zugewandte Fangdüse 13 mit sich daran anschließendem Venturi-Rohr 14 eingesetzt ist. An den Ausgang des Venturi-Rohrs 14 schließt sich ein nicht-gezeichneter, zur ebenfalls nicht-gezeichneten Pulver-Beschichtungspistole führender Schlauch an, durch den das Pulver-Luft-Gemisch vom Injektor zur Pistole gefördert wird. Von der Unterseite des Gehäuseblocks 10 führt ein Pulveransaugkanal 15 in eine die Treibdüse 12 umgebende, den Mittelbereich der erwähnten Querbohrung darstellende Unterdruckkammer 16.

Von der Oberseite des Gehäuseblocks 10 führt eine vertikale Förderluft-Zuführleitung 17 bis zum Düsenstock 11 der Treibdüse 12 und stellt eine Druckluftverbindung zur Treibdüse 12 her. Vor dem Düsenstock 11 ist in die Förderluft-Zuführleitung 17 ein Rückschlagventil 18 eingesetzt. Ein nicht-gezeichnetes, außerhalb des Gehäuseblocks 10 befindliches Förderluft-Steuerventil dient zur manuellen Steuerung der Förderluft.

Innerhalb des Gehäuseblocks 10 gehen von der Förderluft-Zuführleitung zwei Zweigkanäle ab, nämlich ein erster Dosierluft-Zweigkanal 19 und ein zweiter Dosierluft-Zweigkanal 20. Beide Zweigkanäle 19, 20 münden in einen vertikalen Dosierluft-Zuführkanal 21, der über ein Rückschlagventil 22 zu Dosierluft-Austrittsöffnungen 23 führt, die in den sich diffusorartig erweiternden Kanalteil des Venturi-Rohrs münden. Die erste Zweigleitung 19 stellt dabei eine unmittelbare Verbindung zwischen Förderluft-Zuführleitung 17 und Dosierluft-Zuführkanal 21 dar, wobei jedoch die Luft-Strömungsmenge durch eine eingesetzte Blende 19a auf einen vorgegebenen Wert begrenzt ist. Die zweite Dosierluft-Zweigleitung 20 führt nicht unmittelbar zum Dosierluft-Zuführkanal 21, vielmehr ist in diese Zweigleitung 20 ein Steuerventil 24 eingesetzt. Dieses Dosierluft-Steuerventil 24 weist einen Ventilkolben 25 mit Einlaß-Ringnut 25a auf, der durch eine Spiralfeder 26 in Richtung nach unten belastet ist. Die Feder 26 drückt dabei den Ventilkolben 25 gegen einen Anschlag, wobei sich dann die Einlaß-Ringnut 25a in Ausfluchtung mit der Durchlaßöffnung einer Blende 20a, die in die zweite Zweigleitung 20 eingesetzt ist, befindet. Zugleich ist dann eine Ventil-Auslaßöffnung 25b in Ausfluchtung mit dem auslaßseitigen Teil der zweiten Zweigleitung 20. Dies bedeutet, daß in dieser auf der Zeichnung dargestellten Position des Ventils 24 die Druckluft von der Förderluft-Zuführleitung 17 über die zweite Dosierluft-Zweigleitung 20 zum Dosierluft-Zuführkanal 21 strömen kann.

Die Stirnfläche 25c des Ventilkolbens 25 ragt abgedichtet in die erste Zweigleitung 19 hinein, und zwar an einer Stelle vor (in Strömungsrichtung gesehen) der Blende 20a. Damit aber liegt auf der Stirnfläche 25c der Druck der Förderluft an. Der Pulver-Injektor arbeitet folgendermaßen. Wird das nicht-gezeichnete Förderluft-Steuerventil geöffnet, dann strömt Druckluft durch die vertikale Leitung 17 nach unten in den Düsenstock 11 und durch diesen hindurch in die Treibdüse 12, aus der dann die Druckluft mit hoher Geschwindigkeit in Richtung auf die Fangdüse 13 zu austritt. Die aus der Treibdüse 12 mit hoher Geschwindigkeit austretende Druckluft reißt Luftmoleküle aus der unmittelbaren Umgebung der Austrittsstelle mit, was zur Folge hat, daß in der Kammer 16 ein Unterdruck auftritt und Pulver aus der Leitung 15 angesaugt wird, das dann zusammen mit der aus der Treibdüse 12 austretenden Druckluft als Luft-Pulver-Gemisch durch die Fangdüse 13 und das Venturi-Rohr 14 hindurch zum nicht-gezeichneten Förderschlauch und weiter zur Beschichtungspistole gefördert wird. Zugleich aber strömt Druckluft aus der Leitung 17 durch die Zweigleitung 19 und deren Blende 19a hindurch in den Dosierluft-Zuführkanal 21 und weiter zu den Dosierluft-Öffnungen 23, aus welchen sie in den Luft-Pulver-Gemischstrom eindringt und diesen sowohl verdünnt als vor allem auch beschleunigt.

Geht man nun davon aus, daß der Druck der Förderluft in der Leitung 17 vergleichsweise gering ist, beispielsweise zwischen 0,5 und 1,5 bar beträgt, und somit der auf die Stirnfläche 25c des Ventilkolbens 25 ausgeübte Druck nicht ausreicht die Feder 26 zusammenzudrücken, dann strömt zusätzlich Druckluft durch die zweite Zweigleitung 20 mit Ventil 24 in den Kanal 21 und weiter zu den Dosierluft-Austrittsöffnungen 23. Die aus den Öffnungen 23 aufgrund der ersten Zweigleitung 19 austretende Dosierluftmenge wird also durch die durch die zweite Zweigleitung 20 hindurchtretende Dosierluftmenge vergrößert. Wird nun aber der Druck in der Förderluft-Zuführleitung 17 durch weiteres Öffenen des nichtgezeichneten Förderluft-Steuerventils erhöht, dann wird aufgrund des an der Stirnfläche 25c des Ventilkolbens 25 anliegenden Drucks der Ventilkolben 25 gegen die Kraft der Feder 26 nach oben geschoben, mit dem Ergebnis, daß zunächst der Druckluftdurchlaß durch die Zweigleitung 20 verkleinert und schließlich - mit weiterer Steigerung des Förderluft-Drucks in der Leitung 17, der Durchlaß völlig unterbrochen wird. Die aus den Öffnungen 23 aufgrund der ersten Zweigleitung 19 austretende Dosierluftmenge wird also in immer geringerem Maße durch die die zweite Zweigleitung 20 durchströmende Druckluft erhöht, bis letztlich nur noch von der ersten Zweigleitung 19 Dosierluft zu den Öffnungen 23 geliefert wird.

Durch entsprechende Bemessung der Blenden 19a und 20a des Ventilwegs und der Federvorspannung des Ventils 24 kann somit erreicht werden, daß die Dosierluft selbsttätig einem vorgegebenen Abhängigkeitsverhältnis zwischen Förderluft und Dosierluft folgt, der Benutzer also lediglich dafür zu sorgen hat, daß die Förderluft auf den jeweils optimalen Wert ihres Durchsatzes bzw. Drucks eingestellt ist.

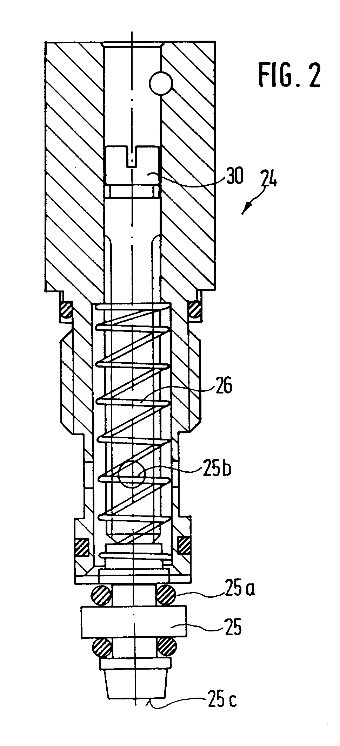

Fig. 2 zeigt eine Abwandlungsform des Dosierventils 24, bei welcher der Hub des Ventilkolbens 25 durch eine Stellschraube 30, die von außen her mittels eines Schraubenziehers betätigbar ist, verstellt werden kann, nämlich derart, daß auch bei hohem Förderluft-Druck das Ventil 24 nicht vollständig schließt, sondern ein kleiner Ringspalt-Durchlaß offenbleibt. Damit kann der Benutzer eine Anpassung an besondere Betriebsbedingungen vornehmen, etwa dann, wenn der Luft-Pulver-Gemisch-Zuführschlauch zwischen Injektor und Beschichtungspistole besonders lang ist.

Normalerweise kann die Feder 26 eine einfache Schraubenfeder mit linearer Charakteristik sein. Es ist aber auch möglich, eine Feder mit progressiver Charakteristik zu verwenden, womit dann eine noch exaktere selbsttätige Nachführung der Dosierluft an die Förderluft (Kennlinien-Nachführung) erreicht werden kann.

Lediglich als Verständnishilfe sei noch das Zahlenbeispiel angegeben, daß der erste Schwellenwert des Förderluft-Drucks, bei dem also das Ventil 24 seine Schließbewegung beginnt, bei 0,5 bis 1,5 bar liegt, der zweite Schwellenwert, bei welchem das Ventil 24 vollständig schließt, bei 2,5 bis 3,5 bar.

Selbstverständlich kann das dargestellte Ausführungsbeispiel zahlreiche Abwandlungen erfahren, ohne den Bereich der Erfindung zu verlassen. Dies gilt insbesondere für die konstruktive Gestaltung des Dosierventils 24 und die Führung der Zweigkanäle 19 und 20 im Gehäuseblock 10. Wesentlich ist jedoch, daß zwei Dosierluft-Zweigkanäle vorhanden sind, deren einer in Abhängigkeit vom Förderluft-Druck in seinem Durchlaßquerschnitt veränderbar ist.

## Patentansprüche

1. Pulver-Injektor zum Bilden eines Pulver-Luft-Gemisches und Fördern des Gemisches zu einer Pulver-Beschichtungspistole, bestehend aus einer Pulver-Ansaugleitung, einer in die Pulver-Ansaugleitung eingesetzten Treibdüse, einer dieser in Strömungsrichtung nachgeschalteten Fangdüse mit angeschlossenem Venturi-Rohr, einer Förderluft-Zuführleitung mit Steuerventil zum Speisen der Treibdüse und einer Dosierluft-Zuführleitung zum Speisen von in das Venturi-Rohr einmündende Dosierluftöffnungen, dadurch gekennzeichnet, daß die Dosierluft-Zuführleitung in zwei parallele Dosierluft-Zweigleitungen (19, 20) aufgeteilt ist, die beide von der Förderluft-Zuführleitung (17) abgehen, und zwar an einer Stelle in Strömungsrichtung nach dem Förderluft-Steuerventil, und in einen gemeinsamen Zuführkanal (21) zu den Dosierluft-Austrittsöffnungen (23) einmünden, daß in beide Zweigleitungen (19, 20) jeweils eine durchlaßbegrenzende Blende (19a, 20a) eingesetzt ist und daß in der zweiten Zweigleitung (20) ein ihren Durchlaßquerschnitt steuerndes Dosierluft-Steuerventil (24) sitzt, das durch den in Strömungsrichtung nach dem Förderluft-Steuerventil in der Förderluft-Zuführleitung (17) herrschenden Druck betätigbar ist.

2. Pulver-Injektor nach Anspruch 1, dadurch gekennzeichnet, daß das Dosierluft-Steuerventil (24) einen den Durchlaßquerschnitt der zweiten Zweigleitung (20) steuernden, verschiebbaren Ventilkolben (25) aufweist, der in seiner einen Verschieberichtung durch eine Feder (26) in seiner anderen Verschieberichtung durch den in der Förderluft-Zuführleitung (17) herrschenden Druck belastet ist.

3. Pulver-Injektor nach Anspruch 2, dadurch gekennzeichnet, daß eine Stirnfläche (25c) des Ventilkolbens (25) des Dosierluft-Steuerventils (24) in die erste Dosierluft-Zweigleitung (19) hineinragt, und zwar in Strömungsrichtung vor deren Blende (19a).

4. Pulver-Injektor nach Anspruch 3, dadurch gekennzeichnet, daß der Hubweg des Ventilkolbens (25) des Dosierluft-Steuerventils (24) mittels einer Stellschraube (30) verstellbar ist.

5. Pulver-Injektor nach Anspruch 3 oder 4, dadurch gekennzeichnet, daß die Feder (26) des Dosierluft-Steuerventils (24) eine progressive Charakteristik aufweist.

## Claims

1. Powder injector for forming a powder-air-mixture and conveying the mixture to a powder-coating gun, comprising a powder suction line, a propelling nozzle in the powder suction line, a mixing nozzle connected downstream of this in the flow direction and having an attached Venturi tube, a conveying air supply line having a control valve for feeding the propelling nozzle, and a dosing air supply line for feeding dosing air apertures opening into the Venturi tube, characterised in that the dosing air supply line is divided into two parallel dosing air branch lines (19, 20) which both proceed from the conveying air supply line (17) at a point downstream of the conveying air control valve in the flow direction, and open into a common supply duct (21) to the dozing air outlet apertures (23), in that a throughflow-limiting diaphragm (19a, 20a) is respectively inserted into both branch lines (19, 20) and in that in the second branch line (20) there is a dozing air control valve (24) controlling its throughflow cross-section, the control valve being actuatable by the pressure prevailing downstream, in the flow direction, of the conveying air control valve in the conveying air supply line (17).

2. Powder injector according to claim 1, characterised in that the dosing air control valve (24) has a movable valve piston (25) controlling the throughflow-cross-section of the second branch line (20), the valve piston being loaded in one of its movement directions by a spring (26) and in its other movement direction by the pressure prevailing in the conveying air supply line (17).

3. Powder injector according to claim 2, characterised in that one face (25c) of the valve piston (25) of the metering air control valve (24) protrudes into the first metering air branch line (19) upstream of its diaphragm (19a) in the flow direction.

4. Powder injector according to claim 3, characterised in that the travel path of the valve piston (25) of the metering air control valve (24) can be adjusted by means of an adjustment screw (30).

5. Powder injector according to claim 3 or 4, characterised in that the spring (26) of the dosing air control valve (24) has a progressive characteristic.

## Revendications

1. Injecteur de poudre destiné à former un mélange de poudre et d'air et à envoyer ce mélange vers un pistolet d'application d'une couche de poudre, constitué d'une conduite d'aspiration de poudre, d'une buse de propulsion insérée dans la conduite d'aspiration de poudre, d'une buse de collecte montée en aval dans le sens de l'écoulement avec tube de Venturi raccordé, d'une conduite d'arrivée d'air de transport avec soupape de commande pour l'alimentation de la buse de propulsion et d'une conduite d'arrivée d'air de dosage pour l'alimentation d'orifices d'air de dosage débouchant dans le tube de Venturi, caractérisé en ce que la conduite d'arrivée d'air de dosage est partagée en deux dérivations d'air de dosage (19, 20) parallèles, qui toutes deux partent de la conduite d'arrivée d'air de transport (17), et ce en un point situé, dans le sens de l'écoulement, après la soupape de commande d'air de transport, et débouchent dans un canal d'arrivée (21) commun menant aux orifices de sortie d'air de dosage (23), en ce que dans chacune des deux dérivations (19, 20) est inséré un diaphragme (19a, 20a) limitant le passage et en ce que dans la seconde dérivation (20) est montée une soupape de commande d'air de dosage (24) commandant sa section de passage, qui peut être actionnée par la pression régnant dans la conduite d'arrivée d'air de transport (17), après la soupape de commande d'air de transport, dans le sens de l'écoulement.

2. Injecteur de poudre selon la revendication 1, caractérisé en ce que la soupape de commande d'air de dosage (24) comporte un piston de soupape (25) coulissant, commandant la section de passage de la seconde dérivation (20), lequel piston est soumis dans l'un de ses sens de déplacement à l'action d'un ressort (26), et dans son autre sens de déplacement à la pression régnant dans la conduite d'arrivée d'air de transport (17).

3. Injecteur de poudre selon la revendication 2, caractérisé en ce qu'une face frontale (25c) du piston (25) de la soupape de commande d'air de dosage (24) s'engage dans la première dérivation d'air de dosage (19), et ce avant son diaphragme (19a), dans le sens de l'écoulement.

4. Injecteur de poudre selon la revendication 3, caractérisé en ce que la course du piston (25) de la soupape de commande d'air de dosage (24) est réglable au moyen d'une vis de réglage (30).

5. Injecteur de poudre selon la revendication 3 ou 4, caractérisé en ce que le ressort (26) de la soupape de commande d'air de dosage (24) présente une caractéristique progressive.
